# EUROPEAN PATENT SPECIFICATION

(11) **EP 0 562 698 B1**
(45) Date of publication and mention of the grant of the patent: **24.09.1997**
(21) Application number: 93201374.1
(22) Date of filing: 29.10.1987
(51) Int. Cl.: C08G 67/02

(54) **Novel olefin/CO copolymers**
Olefin/CO-Copolymere
Copolymères d'oléfines et de CO

(30) Priority: 30.10.1986 NL 8602733
(43) Date of publication of application: 29.09.1993
(62) Divisional of application: 87202086.2
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 121 965
- EP-A- 0 171 670
- FR-A- 2 213 947
- US-A- 3 334 081
- US-A- 4 137 382

## Description

The invention relates to novel copolymers of carbon monoxide with at least two α-olefinically unsaturated compounds.

Copolymers of carbon monoxide with one or more compounds of the general formula (CH₂=CR₁)-R₂, wherein R₁, and R₂ represent hydrogen atoms and/or hydrocarbyl groups, comprise carbonyl groups as functional groups. Therefore they are referred to as polyketones. These carbonyl groups can be converted at least partly into a variety of other functional groups by means of chemical reaction. This chemical modification leads to changes in the properties of the polymers and renders the latter eligible for uses for which the original polymers were not very or not at all suitable. As examples of chemical reactions to which the polymers can be subjected may be mentioned the conversion into polyamines by way of catalytic hydrogenation in the presence of ammonia, the conversion into polyalcohols by way of catalytic hydrogenation, the conversion into polyphenols by way of condensation with phenols and the conversion into polythiols by way of catalytic hydrogenation in the presence of hydrogen sulphide.

Among the copolymers of carbon monoxide with compounds of the general formula (CH₂=CR₁)-R₂ (for the sake of brevity referred to as A), high molecular weight linear alternating polymers composed of units of the general formula -CO-(A')-, wherein A' represents a monomer unit originating in a monomer A used, form a special class. Such copolymers can be prepared, inter alia, by using catalyst compositions based upon
a) a palladium compound,
b) an anion of an acid with a pKa of less than 4, and
c) either a phosphorus bidentate ligand, or a nitrogen bidentate ligand, which bidentate ligands meet certain structural requirements.

An investigation carried out by the Applicant into these copolymers has shown that they can be chemically modified by introducing into the monomer mixture from which they are prepared, in addition to carbon monoxide and one or more monomers A, a relatively small quantity of one or more monomers B, chosen from the group composed of the general formulae (CH₂=CR₁)N(R₂)COR₄ and (CH₂=CR₁)CON(R₂)(R₄), wherein R₁, and R₂ have the meanings mentioned hereinbefore and R₄ is a hydrogen atom or a hydrocarbyl group.

The use of the above-mentioned catalyst compositions with such a monomer mixture affords copolymers made up of units of the general formula -CO-(A')- and units of the general formula -CO-(B')-, wherein B' represents a monomer unit originating in a monomer B used. It follows from this structure that the present copolymers are alternating copolymers, i.e. in the polymer chains every unit CO is positioned in between a unit originating from an olefinically unsaturated monomer irrespective of whether this unit is A' or B'.

Because of the nature of the monomers B used, the polymers obtained comprise amide groups as functional groups, in addition to the carbonyl groups originally present in the polymers. As distinct from the chemical modification described hereinbefore, in which at least part of the carbonyl groups present in the polymers are converted into other functional groups, i.e. a chemical modification after the polymerization, the use of monomers of type B as co-monomers can be regarded as a chemical modification in situ, i.e. during the polymerization. Just like the carbonyl groups, the amide groups can be converted at least partly into a variety of other functional groups by chemical reaction after the polymerization.

Briefly stated, the copolymers to which the invention relates can be defined as follows:
a) they have been prepared by polymerization of carbon monoxide with one or more compounds A and with one or more compounds B,
b) they have a linear structure, and
c) they are made up of units of the general formula -CO-(A')- and units of the general formula -CO-(B')-.

Copolymers that meet the criteria a)-c) are novel.

The present patent application therefore relates to novel copolymers of carbon monoxide with at least two α-olefinically unsaturated compounds, which polymers meet the criteria mentioned hereinbefore under a)-c). The patent application further relates to the preparation of the copolymers.

Per unit -CO-(B')- the polymers of the invention preferably comprise, on an average, fewer than 2000 and in particular fewer than 1500 units -CO-(A')-. The monomers A and B that are used in the preparation according to the invention preferably contain fewer than 20, and in particular fewer than 10, carbon atoms. In the preparation of the polymers the starting mixture is preferably a polymer mixture which, in addition to carbon monoxide, comprises only a single monomer A and a single monomer B.

As examples of olefinically unsaturated hydrocarbons of the general formula (CH₂=CR₁)-R₂ which in the preparation of the polymers are eligible for use as the monomers A, may be mentioned, inter alia, ethene, propene, butene-1, pentene-1, hexene-1, octene-1, styrene, p-methyl styrene and p-ethyl styrene. Preference is given to the use of ethene as the monomer A.

As examples of amides of the general formula (CH₂=CR₁)N(R₂)-COR₄ which in the preparation of the polymers are suitable for use as the monomer B, may be mentioned, inter alia, N-vinyl acetamide, N-vinyl benzamide, N-vinyl pyrrolidone, N-vinyl-N-methyl acetamide, N-vinyl-N-phenyl benzamide, N-vinyl-N-methyl benzamide and N-vinyl N-phenyl acetamide. Good results have been obtained by using N-vinyl pyrrolidone as the monomer B. R₂ and R₄ together may form part of a cyclic structure.

As examples of amides of the general formula (CH₂=CR₁)CON(R₂)(R₄) suitable for use as the monomer B, may be mentioned, inter alia, acrylamide, N,N-dimethyl acrylamide, N,N-diethyl acrylamide and N,N-diphenyl acrylamide.

As stated hereinbefore, in accordance with the nature of the monomers B used, the polymers of the invention comprise functional groups which can be at least partly converted into other functional groups by means of chemical modification.

The use of amides as the monomer B leads to the formation of polymers having amide groups as functional groups. When the polymers of the invention are subjected to chemical modification via the introduced amide groups, there is a distinction as to whether an amide of the general formula (CH₂=CR₁)N(R₂)COR₄ was used In the preparation of the polymers, or an amide of the general formula (CH₂=CR₁)CON(R₂)(R₄). This is due to a difference in the way in which the amide groups are bound to the carbon chain of the polymer. In the former case a polymer is obtained in which the amide groups are bound to the carbon chain by the nitrogen atom. In the latter case a polymer is obtained in which the amide groups are bound to the carbon chain by the carbon atom. The difference in performance that the two polymer types exhibit during chemical modification may be apparent from the following example. If a polymer of the invention which has been prepared by using a monomer B of the general formula (CH₂=CR₁)N(R₂)COR₄ is objected to hydrolysis, this will afford a polymer in which amine groups are present in the places where originally there were amide groups, i.e. the polymer has been converted into a polyamine. However, when a polymer of the invention which has been prepared by using a monomer B of the general formula (CH₂=CR₁)CON(R2)(R₄) is subjected to hydrolysis, this will afford a polymer in which carboxyl groups are present in the places where originally there were amide groups, i.e. the polymer has been converted into a polycarboxylic acid.

For the preparation of polymers according to the invention it is preferred to use the afore-mentioned catalyst compositions comprising a phosphorus or nitrogen bidentate ligand. The palladium compound used in these catalyst compositions as component a) is preferably a palladium salt of a carboxylic acid and in particular palladium acetate.

As examples of acids with a pKa of less than 4 (determined in aqueous solution at 18 °C) whose anions should be present in the catalyst compositions as components b), may be mentioned, inter alia, mineral acids, such as perchloric acid, sulphuric acid, phosphonic acid and nitrous acid, sulphonic acids, such as 2-hydroxy propane-2-sulphonic acid, para-toluenesulphonic acid, methane sulphonic acid and trifluoromethane sulphonic acid, and carboxylic acids, such as trifluoro acetic acid, trichloro acetic acid, dichloro acetic acid, difluoro acetic acid, tartaric acid and 2,5-dihydroxy benzoic acid. Preferably, the catalyst composition comprises an anion of an acid with a pKa of less than 2 as the component b) and in particular an anion of a sulphonic acid, such as para-toluenesulphonic acid, or an anion of a carboxylic acid, such as trifluoro acetic acid. In the catalyst compositions component b) is preferably present in a quantity of from 0.5 to 200, and in particular of from 1.0 to 100, equivalents per gram atom of palladium. Component b) may be introduced into the catalyst compositions either in the form of an acid or in the form of a salt. Eligible salts include non-noble transition metal salts. When component b) is used as a salt of a non-noble transition metal, preference is given to a copper salt. If component b) is used in the catalyst composition in the form of an acid or of a non-noble transition metal salt, it is preferred also to take up a quinone as a component d) in order to enhance the activity of the catalyst compositions. 1,4-Benzoquinones and 1,4-naphthaquinones are very suitable for the purpose. If desired, components a) and b) can be combined in a single compound. An example of such a compound is palladium para-tosylate.

The phosphorus bidentate ligands suitable for use as components c) in the catalyst compositions have the general formula R₆R₇P-R-PR₈R₉, wherein R₆-R₉ represent similar or dissimilar hydrocarbyl groups which may or may not be substituted with polar groups and R represents a bivalent organic bridging group which contains at least two carbon atoms in the bridge. Preference is given to phosphorus bidentate ligands wherein R₆-R₉ represent similar or dissimilar aryl groups which may or may not be substituted with polar groups, and in particular to such phosphorus bidentate ligands in which at least one of the aryl groups has at least one polar substituent situated in a position ortho or para to phosphorus. Preference is further given to phosphorus bidentate ligands in which the polar substituents that may be present in the groups R₆-R₉ are alkoxy groups and in particular methoxy groups. Finally, preference is given to phosphorus bidentate ligands in which the groups R₆-R₉ are similar to one another and in which the bivalent organic bridging group contains three carbon atoms in the bridge. Examples of suitable phosphorus bidentate ligands are
1,3-bis(diphenyl-phosphino)propane,
1,3-bis[di(4-methyl-phenyl)phosphino]propane,
1,3-bis[di(4-methoxy-phenyl)phosphino]propane,
1,3-bis[di(2-methoxy-phenyl)phosphino]propane,
1,3-bis[di(2,4-dimethoxy-phenyl)phosphino]propane,
1,3-bis[di(2,6-dimethoxy-phenyl)phosphino]propane,
and 1,3-bis[di(2,4,6-trimethoxy-phenyl)phosphino]propane.

The use of phosphorus bidentate ligands in which at least one of the groups R₆-R₉ is an aryl group having at least one polar substituent in a position ortho to phosphorus as the component c) offers an additional advantage in that in this case in addition to anions of acids with a pKa of less than 4, also anions of acids with a pKa of at least 4 but less than 6 are eligible for use as components b). Preferably, the phosphorus bidentate ligands are used in the catalyst compositions in a quantity of 0.1-3 and in particular of 0.75-2 mol per mol of palladium compound.

Nitrogen bidentate ligands that are eligible for use in the catalyst compositions as components c) have the general formula 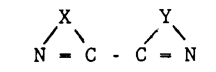 wherein X and Y represent similar or dissimilar bridging groups, each containing three or four atoms in the bridge, at least two of which are carbon atoms. In the nitrogen bidentate ligands the bridging groups X and Y are connected by the two carbon atoms shown in the general formula. In addition to this linkage, there may exist a further junction between the bridging groups X and Y, such as is the case with 1,10-phenanthroline and compounds derived therefrom. If, in addition to carbon atoms, the bridging groups X and Y contain further atoms in the bridge, these atoms are preferably nitrogen atoms. Further, preference is given to nitrogen bidentate ligands in which the bridging groups X and Y are similar. Examples of suitable nitrogen bidentate ligands are 2,2'-bipyridyl and compounds derived therefrom and 1,10-phenanthroline and compounds derived therefrom. If a catalyst composition based upon a nitrogen bidentate ligand is used to prepare the polymers of the invention, it is preferred to use 2,2'-bipyridyl or 1,10-phenanthroline. Preferably, the nitrogen bidentate ligands are used in the catalyst compositions in a quantity of 0.5-200 and in particular 1-50 mol per mol of palladium compound.

The quantity of bidentate ligand-containing catalyst composition used in the preparation of the polymers of the invention may vary within wide ranges. Per mol of olefinically unsaturated compound to be polymerized, such a quantity of catalyst is preferably used as to contain 10^{- 7} to 10^{- 3} and in particular 10^{- 6} to 10^{- 4} gram atom of palladium. The molar ratio of the olefinically unsaturated compounds relative to carbon monoxide is preferably 10:1-1:5 and in particular 5:1-1:2. In the monomer mixture from which the polymers are prepared, the ratio between the monomers A and B is preferably chosen such as to afford polymers comprising fewer than 2000 and in particular fewer than 1500 units -CO-(A')- per unit -CO-(B')-.

The preparation of the copolymers of the invention by using a bidentate-ligand-containing catalyst is preferably carried out at a temperature of 20-200 °C and a pressure of 1-200 bar and in particular at a temperature of 30-150 °C and a pressure of 20-100 bar. The polymerization is preferably executed in a liquid diluent. Very suitable liquid diluents are lower alcohols, such as methanol and ethanol.

The invention will now be illustrated with the aid of the following example.

### Example

A carbon monoxide/ethene/N-vinyl-pyrrolidone terpolymer was prepared as follows. A stirred autoclave of 300 ml capacity was charged with a catalyst solution comprising
20 ml of methanol,
0.1 mmol of palladium acetate,
0.5 mmol of copper para-tosylate,
0.15 mmol of 1,3-bis(diphenyl-phosphino)propane, and
2 mmol of 1,4-benzoquinone.

After the introduction of 30 ml of N-vinyl pyrrolidone into the autoclave, air was removed by evacuation and ethene was introduced with pressure until a pressure of 15 bar was reached, followed by carbon monoxide, until a pressure of 45 bar was reached. Then the contents of the autoclave were brought to a temperature of 70 °C. After 5 hours the polymerization was terminated by cooling down to room temperature and releasing the pressure. The polymer formed was filtered off, washed with methanol and dried in vacuo at room temperature. 11.1 g of terpolymer having a melting point of 250 °C was obtained.

With the aid of ¹³C-NMR analysis it was established that the terpolymer had a linear structure and was made up of units of the formula -CO-(C₂H₄)- and units of the formula -CO-(C₆H₉ON)- and that the said units occurred randomly distributed within the terpolymer. From the data obtained by ¹³C-NMR analysis it was further deduced that per unit of the formula -CO-(C₆H₉ON)- the terpolymer comprised on average 160 units of the formula -CO-(C₂H₄)-.

## Claims

1. Copolymers of carbon monoxide with at least two α-olefinically unsaturated compounds, which
a) have been prepared by polymerization of carbon monoxide with one or more monomers (A) of the general formula (CH₂=CR₁)-R₂ and with one or more monomers (B) chosen from the group formed by compounds of the general formulae (CH₂=CR₁)N(R₂)COR₄ and (CH₂=CR₁)CON(R₂)R₄, wherein R₁, R₂ and R₄ are hydrogen atoms and/or hydrocarbyl groups, on the understanding that R₂ and R₄ together may form part of a cyclic structure,
b) have a linear structure, and
c) are made up of units of the general formula -CO-(A')- and units of the general formula -CO-(B')-, wherein A' and B' represent monomer units originating, respectively, in monomers A and B used, a CO unit being positioned between each two monomer units A' and B'.

2. Copolymers as claimed in claim 1, characterized in that per unit -CO-(B')- they comprise on average fewer than 1500 units -CO-(A')-.

3. Copolymers as claimed in claim 1 or 2, characterized in that the monomers A and B used have fewer than 10 carbon atoms.

4. Copolymers as claimed in one or more of claims 1-3, characterized in that ethene is used as monomer A.

5. Copolymers as claimed in one or more of claims 1-4, characterized in that N-vinyl pyrrolidone is used as monomer B.

6. Process for the preparation of copolymers as claimed in any one of claims 1 to 5, characterized in that a mixture of carbon monoxide with one or more monomers A and with one or more monomers B is polymerized by using a catalyst composition based upon
a) a palladium compound,
b) an anion of an acid with a pKa of less than 4, and
c) either a phosphorus bidentate ligand of the general formula R₆R₇P-R-PR₈R₉, wherein R₆-R₉ represent similar or dissimilar hydrocarbyl groups which may or may not be substituted with polar groups and R represents a bivalent organic bridging group having at least two carbon atoms in the bridge, or a nitrogen bidentate ligand of the general formula 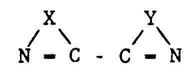 wherein X and Y represent similar or dissimilar bridging groups, each having three or four atoms in the bridge, at least two of which are carbon atoms.

7. Process as claimed in claim 6, characterized in that a catalyst composition is used which in addition comprises a quinone, such as a 1,4-benzoquinone or a 1,4-naphthaquinone, as a component d).

8. Process as claimed in claims 6 or 7, characterized in that a catalyst composition is used which comprises as component c) a phosphorus bidentate ligand in which at least one of the aryl groups holds at least one polar substituent in a position ortho or para to phosphorus.

9. Process as claimed in one or more of claims 6-8, characterized in that a catalyst composition is used which comprises as component c) a 2,2'-bypiridyl which may or may not be substituted or a 1,10-phenanthroline which may or may not be substituted.

## Patentansprüche

1. Copolymere aus Kohlenmonoxid und wenigstens zwei α-olefinisch ungesättigten Verbindungen, die
a) durch Polymerisation von Kohlenmonoxid mit einem oder mit mehreren Monomeren (A) der allgemeinen Formel (CH₂=CR₁)-R₂ und einem oder mehreren Monomeren (B), ausgewählt aus der aus Verbindungen der allgemeinen Formeln (CH₂=CR₁)N(R₂)COR₄ und (CH₂=CR₁)CON(R₂)R₄ bestehenden Gruppe, hergestellt worden sind, worin R₁, R₂ und R₄ Wasserstoffatome und/oder Hydrocarbylgruppen bedeuten, mit der Maßgabe, daß R₂ und R₄ zusammen Teil einer cyclischen Struktur sein können,
b) eine lineare Struktur aufweisen und
c) aus Einheiten der allgemeinen Formel -CO-(A')- und Einheiten der allgemeinen Formel -CO-(B')- bestehen, worin A' und B' Monomereinheiten bedeuten, die ihren Ursprung in den verwendeten Monomeren A bzw. B haben, wobei zwischen jeweils zwei Monomereinheiten A' und B' eine CO-Einheit angeordnet ist.

2. Copolymere nach Anspruch 1, dadurch gekennzeichnet, daß sie pro Einheit -CO-(B')- im Durchschnitt weniger als 1.500 Einheiten -CO-(A')- aufweisen.

3. Copolymere nach Anspruch 1 oder Anspruch 2, dadurch gekennzeichnet, daß die eingesetzten Monomere A und B weniger als 10 Kohlenstoffatome aufweisen.

4. Copolymere nach einem der Ansprüche 1 bis 3, dadurch gekennzeichnet, daß als Monomer A Ethen verwendet wird.

5. Copolymere nach einem oder mehreren der Ansprüche 1 bis 4, dadurch gekennzeichnet, daß als Monomer B N-Vinylpyrrolidon verwendet wird.

6. Verfahren zur Herstellung von Copolymeren nach einem der Ansprüche 1 bis 5, dadurch gekennzeichnet, daß ein Gemisch aus Kohlenmonoxid mit einem oder mit mehreren Monomeren A und mit einem oder mit mehreren Monomeren B unter Verwendung einer Katalysatorzusammensetzung polymerisiert wird, die auf
a) einer Palladiumverbindung,
b) einem Anion einer Säure mit einem pKa-Wert von kleiner als 4 und
c) entweder einem Phosphor-Bidentatliganden der allgemeinen Formel R₆R₇P-R-PR₈R₉, worin R₆ bis R₉ gleiche oder verschiedene Hydrocarbylgruppen darstellen, die durch polare Gruppen substituiert oder unsubstituiert sein können und R eine zweiwertige organische Brückengruppe bedeutet, die wenigstens zwei Kohlenstoffatome in der Brücke enthält, oder einem Stickstoff-Bidentatliganden der allgemeinen Formel 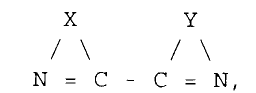 worin X und Y gleiche oder verschiedene Brückengruppen darstellen, die jeweils drei oder vier Atome in der Brücke aufweisen, von denen wenigstens zwei Kohlenstoffatome sind,
beruht.

7. Verfahren nach Anspruch 6, dadurch gekennzeichnet, daß eine Katalysatorzusammensetzung verwendet wird, die zusätzlich ein Chinon, wie ein 1,4-Benzochinon oder ein 1,4-Naphtochinon, als Komponente d) enthält.

8. Verfahren nach Anspruch 6 oder Anspruch 7, dadurch gekennzeichnet, daß eine Katalysatorzusammensetzung verwendet wird, die als Komponente c) einen Phosphor-Bidentatliganden enthält, worin wenigstens eine der Arylgruppen wenigstens einen polaren Substituenten in einer ortho- oder para-Stellung zum Phosphor aufweist.

9. Verfahren nach einem oder mehreren der Ansprüche 6 bis 8, dadurch gekennzeichnet, daß eine Katalysatorzusammensetzung verwendet wird, die als Komponente c) ein substituiertes oder unsubstituiertes 2,2'-Bipyridyl oder ein substituiertes oder unsubstituiertes 1,10-Phenanthrolin enthält.

## Revendications

1. Copolymères du monoxyde de carbone avec au moins deux composés α-oléfiniquement insaturés, qui
a) ont été préparés par la polymérisation du monoxyde de carbone avec un ou plusieurs monomères (A) de la formule(CH₂=CR₁)-R₂ et un ou plusieurs monomères (B) choisis dans le groupe formé par les composés répondant aux formules générales (CH₂=CR₁)N(R₂)COR₄ et (CH₂=CR₁)CON(R₂)(R₄), dans lesquelles R₁, R₂ et R₄ représentent des atomes d'hydrogène et/ou des radicaux hydrocarbyle, avec la condition que R₂ et R₄ ensemble puissent faire partie d'une structure cyclique,
b) possèdent une structure linéaire et
c) sont constitués d'unités de la formule générale -CO-(A')- et d'unités de la formule générale -CO-(B')-, dans lesquelles A' et B' représentent des unités monomériques tirant leur origine respectivement des monomères A et B employés, une unité CO étant logée entre chaque deux unités monomériques A' et B'.

2. Copolymères suivant la revendication 1, caractérisés en ce que, par unité -CO-(B')-, ils comprennent, en moyenne, moins de 1500 unités -CO-(A')-.

3. Copolymères suivant la revendication 1 ou 2, caractérisés en ce que les monomères A et B employés, possèdent moins de 10 atomes de carbone.

4. Copolymères suivant une ou plusieurs des revendications 1 à 3, caractérisés en ce que l'on utilise l'éthène, à titre de monomère A.

5. Copolymères suivant une ou plusieurs des revendications 1 à 4, caractérisés en ce que l'on utilise la N-vinylpyrrolidone, à titre de monomère B.

6. Procédé de préparation de copolymères suivant l'une quelconque des revendications 1 à 5, caractérisé en ce que l'on polymérise un mélange de monoxyde de carbone et d'un plusieurs monomères A et d'un ou plusieurs monomères B, en utilisant une composition catalytique, à base
a) d'un composé de palladium,
b) d'un anion d'un acide qui possède un pKa inférieur à 4 et
c) soit d'un ligand bidentate du phosphore de la formule générale R₆R₇P-R-PR₈R₉, dans laquelle les symboles R₆ à R₉ représentent des radicaux hydrocarbyle identiques ou différents, qui peuvent ou non être substitués par des radicaux polaires et R représente un groupe de pontage organique bivalent comportant au moins deux atomes de carbone dans le pont, soit un ligand bidentate de l'azote de la formule générale 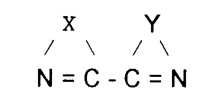 dans laquelle X et Y peuvent représenter des radicaux de pontage identiques ou différents, comportant chacun trois ou quatre atomes dans le pont, dont au moins deux sont des atomes de carbone.

7. Procédé suivant la revendication 6, caractérisé en ce que l'on utilise une composition catalytique qui comprend, en plus, une quinone, comme une 1,4-benzoquinone ou une 1,4-naphtoquinone, à titre de composant d).

8. Procédé suivant la revendication 6 ou 7, caractérisé en ce que l'on utilise une composition catalytique qui comprend, à titre de composant c), un ligand bidentate du phosphore dans lequel au moins l'un des radicaux aryle comporte au moins un substituant polaire en position ortho ou en position para, par rapport au phosphore.

9. Procédé suivant l'une quelconque des revendications 6 à 8, caractérisé en ce que l'on utilise une composition catalytique qui comprend, à titre de composant c), un 2,2'-bipyridyle qui peut ou non être substitué, ou une 1,10-phénanthroline qui peut ou non être substituée.
